# FASCICULE DE BREVET EUROPEEN

(11) **EP 1 519 903 B1**
(45) Date de publication et mention de la délivrance du brevet: **08.02.2012**
(21) Numéro de dépôt: 03755579.4
(22) Date de dépôt: 25.06.2003
(51) Int. Cl.: C03C 17/42, C03C 17/00, C03C 19/00

(54) **MARQUAGE DE SUBSTRATS TRAITES THERMIQUEMENT**
KENNZEICHNUNG VON WÄRMEBEHANDELTEN SUBSTRATEN
MARKING HEAT-TREATED SUBSTRATES

(30) Priorité: 03.07.2002 DE 10229833
(43) Date de publication de la demande: 06.04.2005
(73) Titulaire: SAINT-GOBAIN GLASS FRANCE, 92400 Courbevoie (FR)
(72) Inventeur: HAUSER, Hubert, 52146 Würselen (DE); STADELMANN, Herbert, 52072 Aachen (DE); KASPER, Andreas, NL-6291 CK Valls (NL)
(74) Mandataire: Colombier, Christian
(86) Numéro de dépôt international: PCT/FR2003/001953
(87) Numéro de publication internationale: WO 2004/007388

(56) Documents cités:
- EP-A- 0 433 137
- WO-A-00/02825
- WO-A-01/94128
- DE-A- 19 516 863
- FR-A- 2 787 061

## Description

L'invention se rapporte à un procédé pour marquer des substrats traités thermiquement, en particulier des vitres trempées, présentant les caractéristiques de la revendication 1, et des substrats marqués par ce procédé, selon la revendication 11.

Les caractéristiques initiales découlent de WO-A1-00/02825, dans laquelle on décrit un procédé pour marquer des vitres après un traitement thermique. Suivant un cas d'application préféré de cette description, des vitres trempées, qui ont été soumises à un essai de vieillissement succédant à la trempe, sont pourvues d'un marquage local coloré. Ce marquage est réalisé au moyen d'une couleur spéciale organique thermochromique, qui est appliquée localement, par exemple par sérigraphie, après la trempe mais avant le vieillissement en un endroit prédéterminé sur la surface de la vitre, respectivement sur une couche mince recouvrant celle-ci.

Avec l'essai de stockage à chaud, aussi appelé Heat-Soaking-Test (ou Heat Soak test), on a montré que la vitre trempée ne contient pas d'inclusions critiques de sulfure de nickel. On sait que de telles inclusions peuvent conduire à une rupture spontanée soudaine, avec des conséquences imprévisibles, au cours de la vie des vitres trempées. Lors de l'essai de stockage à chaud, au cours duquel les vitres sont chauffées à des températures maximales généralement comprises entre 180 et 340°C, notamment de près de 300°C, suivant une courbe temps-température prédéterminée, des vitres se sont brisées de façon aléatoire avant leur montage. La trempe des vitres n'a pas encore disparu à ces températures. De toute façon, cet essai de stockage à chaud prend beaucoup de temps et nécessite des frais d'installation relativement élevés.

Si la couleur thermochromique a été appliquée avant l'essai, celle-ci change de façon permanente par une conversion irréversible de la couleur. De ce fait, on peut déceler immédiatement l'exécution de l'essai de stockage à chaud sur les vitres trempées testées / traitées thermiquement terminées. Même de très petits résidus de couleur peuvent être identifiés nettement après l'exécution de l'essai de stockage à chaud, par des méthodes appropriées.

Pour l'application décrite ici, des couleurs thermochromiques qui contiennent le composé chimique hexacyanoferrate de fer (II, III) comme pigment thermochromique peuvent convenir. Un exemple d'un tel pigment disponible dans le commerce est le "Mannox Blue 510". La couleur doit présenter une bonne adhérence sur le verre en raison de sa composition.

Des marquages colorés de cette nature ne sont pas comparables à un émail entre autres. Ils ne peuvent pas pénétrer dans la surface du verre ou se lier de façon durable à celle-ci. Au contraire, on peut en principe les enlever de la surface du verre, complètement et pratiquement sans traces, avec une lame ou de la laine d'acier après un essai de stockage à chaud. Il en résulte qu'une identification sûre des vitres testées n'est pas possible, ou autrement dit: on ne peut pas exclure de façon sûre que des vitres sans marque de couleur n'ont pas été soumises à un essai de stockage à chaud. Ainsi, la valeur signalétique de la marque de couleur et la présomption de qualité visible qui en découle sont limitées de façon indésirable.

De plus, il ne devrait cependant pas être possible d'appliquer la couleur de marquage déjà avant la trempe, et de ne produire le changement de couleur que par la trempe thermique, sans exécuter encore par la suite un essai de stockage à chaud. La couleur précitée perd toute adhérence à la surface du verre après l'action de températures élevées nettement au-delà de 300°C, telles qu'elles sont nécessaires pour la trempe du verre (largement au-delà de 600°C), de sorte qu'elles ne sont plus utilisables pour le marquage.

Par le document DE-C1-39 40 749, on connaît encore un autre procédé pour le marquage ou l'impression durable de vitres, dans lequel on provoque, dans une couche déposée par sérigraphie, des changements de couleur locaux par lesquels les caractéristiques individuelles de la vitre considérée sont visualisées de façon ineffaçable. Cela se passe dans le procédé connu par le fait qu'un marquage composé d'une matière organique (couleur ou encre) est appliqué localement, selon un motif prédéterminé, sur la surface de la vitre avant l'impression de la pâte de sérigraphie inorganique. Lors de la cuisson à haute température de la pâte de sérigraphie appliquée ensuite, les composants organiques se volatilisent. Il apparaît ainsi dans le revêtement organique des perturbations locales ou même des trous, qui sont nettement perceptibles visuellement. Une modification ou une élimination de ces motifs n'est possible que par une élimination simultanée du revêtement inorganique cuit.

Il est en outre connu (DE-C2-41 11 625, EP-B1-0 281 351), de produire dans des revêtements déposés sur un substrat par sérigraphie, des structures fines sous la forme de stries ou de motifs analogues. Dans les cas précités, ces hétérogénéités locales servent à améliorer l'aptitude au brasage de la pâte de sérigraphie forcément électriquement conductrice après l'opération de cuisson, respectivement l'amélioration de l'adhérence des points de brasage.

Le document DE 19516863 A enseigne un procédé de marquage d'un substrat en verre par sablage formant des creux et l'application d'une couleur dans ces creux.

L'invention a pour objet de proposer un procédé pour le marquage visuel de substrats au cours d'un traitement thermique, qui assure que la couleur de marquage ne peut pas être enlevée mécaniquement de la surface du substrat, de telle manière que le substrat soit marqué de façon permanente. Il convient aussi de proposer un substrat, en particulier une vitre, muni d'un marquage conforme à l'invention.

En ce qui concerne le procédé, ce problème est résolu conformément à l'invention par les caractéristiques de la revendication 1. L'invention concerne également une vitre selon la revendication indépendante de vitre. Les caractéristiques des revendications secondaires respectivement subordonnées aux revendications indépendantes présentent des perfectionnements avantageux de ces objets.

Pour empêcher que la couche de marquage, respectivement la couleur de marquage, puisse être enlevée par des moyens mécaniques, on produit un champ de marquage sur une surface du substrat avant la trempe. Celui-ci est pourvu d'une structure superficielle, qui se distingue de la surface habituelle (lisse) et provoque en particulier une liaison étroitement adhérente entre le champ coloré et la couche de marquage appliquée sur celui-ci, le cas échéant laisse même pénétrer cette dernière en profondeur.

Le champ de marquage peut être produit par une modification locale de la surface lisse du substrat lui-même, en modifiant localement la surface lisse dans le sens d'une adhérence particulièrement bonne de la couleur thermochromique de marquage, par exemple par une action chimique et/ou mécanique (attaque acide, sablage, meulage). En l'espèce, il doit apparaître dans la surface du substrat de petites inégalités ou de petits creux, qui n'influencent pas négativement l'impression générale du substrat mais qui forment très bien une base pour le dépôt du marquage, d'où celui-ci ne pourra être enlevé qu'à grands frais et en laissant presque toujours des traces.

Une alternative réside dans le dépôt d'une structure superficielle supplémentaire sous la forme d'un revêtement à cuire, en particulier lors de la trempe thermique. Le champ de marquage ainsi formé forme également une surface finement poreuse ou aussi structurée de façon appropriée, sur laquelle une couleur de marquage d'une part adhère bien et d'où elle ne peut d'autre part pratiquement pas être enlevée sans laisser de traces.

Si un revêtement à cuire forme le champ de marquage, il est alors réalisé avec une structure superficielle favorisant l'adhérence et la pénétration de la couleur thermochromique, sous la forme d'une trame ou d'un motif structuré(e), qui interrompt le revêtement couvrant la surface. Dans l'état de la technique de l'impression par sérigraphie déjà discuté, on décrit des possibilités de munir un tel revêtement d'interruptions, en cas de besoin en pleine épaisseur, donc jusqu'à la surface du substrat. On peut cependant produire aussi des structures désordonnées, irrégulières.

Le marquage perfectionné suivant l'invention peut être réalisé d'une façon particulièrement discrète et pour un coût supplémentaire relativement faible, si le champ de marquage est prévu comme une partie d'un tampon de marquage du substrat. Des vitres trempées sont la plupart du temps pourvues d'un tampon du fabricant, qui permet de remonter au fabricant lui-même, au lieu de fabrication, à la date de fabrication, etc. Cette zone peut recevoir une nouvelle utilisation avec une plage / partie de surface marquée de couleur.

Si le champ de marquage est produit par une modification de la surface du substrat lui-même, il est également possible de réaliser ici aussi une marque d'identification prédéterminée, reproductible, à l'aide d'un tampon dit de gravure. Selon l'épaisseur du substrat concerné, par exemple une vitre, ce champ de marquage peut même être disposé sur la tranche, donc en un endroit particulièrement peu visible. On peut en principe aussi - à un coût plus élevé - appliquer un champ de marquage imprimé sur une tranche de la vitre.

Le résultat est qu'il apparaît localement sur le champ de marquage de fines inégalités limitées (rayures, piqûres) sur la surface du substrat, qui ont en même temps une surface interne rugueuse par comparaison avec le reste de la surface du substrat. La couleur de marquage à appliquer remplit ces inégalités et se lie à leur surface rugueuse.

Naturellement, plusieurs champs de marquage peuvent aussi être prévus sur un seul substrat, de même les deux formes de réalisation précitées peuvent être combinées l'une à l'autre.

En raison de la liaison intime de la couche de marquage avec la surface structurée du champ de marquage sous-jacent, il n'est en conséquence plus possible d'enlever complètement la couleur avec un rabot de verrier, une lame ou d'autres outils. Même en opérant de façon intensive avec de la laine d'acier, des résidus de couleur pourraient toujours être identifiés à l'aide d'un microscope. De même, on peut toujours déterminer sans problème par une analyse, quelle couleur a été employée.

Si on effectuait néanmoins une tentative non autorisée, d'enlever le marquage en plus du revêtement cuit ou de la structure superficielle appliquée, cela laisserait dans tous les cas des traces nettes sur la surface du substrat, qui rendraient le substrat concerné suspect d'avoir été manipulé.

D'autres détails et avantages de l'objet de l'invention seront fournis par les dessins d'un exemple de réalisation et de sa description détaillée qui suit.

Dans les dessins, la
- Fig. 1: montre une forme de réalisation d'un tampon de fabricant imprimé et cuit sur une vitre trempée, avec un marquage conforme à l'invention; et la
- Fig. 2: représente une coupe transversale agrandie, sans échelle particulière, prise le long de la ligne II-II de la figure 1, à travers la zone du marquage.

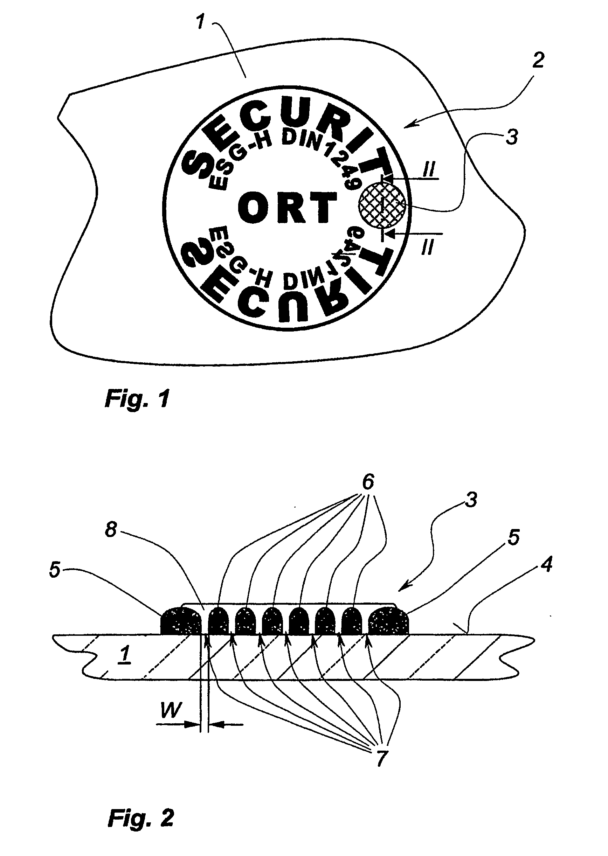

Suivant la figure 1, un tampon de fabricant 2 est imprimé et cuit sur une surface d'une vitre trempée 1 illustrée seulement par un fragment. Il donne d'une part le lieu de fabrication et éventuellement une marque du fabricant. En outre, le tampon 2 indique qu'il s'agit de verre monolithique trempé. ESG signifie verre de sécurité trempé, le "H" signifie qu'un essai de stockage à chaud a été effectué, et il indique encore la norme DIN correspondante.

Conformément à l'invention, on a ajouté au tampon un champ de marquage supplémentaire 3, sur lequel on reviendra plus en détail en relation avec la figure 2.

Il convient de remarquer d'emblée que ce champ de marquage supplémentaire 3 ne doit pas obligatoirement être joint au tampon 2, contrairement à la représentation donnée à titre d'exemple, mais qu'il peut également être disposé en un autre endroit quelconque de la surface de la vitre, et même sur la tranche. De toute façon, la disposition montrée ici apparaît comme la plus intéressante, parce que le tampon 2 doit être contrôlé visuellement sans difficulté lors de tout enlèvement et qu'ainsi en même temps le marquage 3 peut aussi être identifié.

Comme cela résulte de la coupe transversale agrandie de la figure 2, le champ de marquage 3 se compose essentiellement d'un élément plat 5, se composant d'une pâte à cuire appropriée, appliqué au cours de la même opération que le tampon 2 sur la surface 4 de la vitre 1. L'élément 5 se présente ici sous la forme d'une trame entourée d'une ligne circulaire, avec des nervures 6, comme cela est déjà illustré dans la figure 1. Les nervures 6 sont surélevées d'environ 5 à 35 µm au-dessus de la surface du verre et délimitent chaque fois des espaces intermédiaires 7, au fond desquels la surface du verre peut être libre.

Sur la surface couverte par l'élément 5, on a déposé une peinture d'une couleur thermochromique 8, qui a pénétré dans les espaces intermédiaires 7, mais aussi qui a couvert ou qui peut couvrir les faces supérieures des nervures 6 de la trame. Les espaces intermédiaires 7 doivent être suffisamment grands pour laisser pénétrer la couleur 8, mais suffisamment petits pour empêcher de façon sûre un arrachement simple avec des outils mécaniques. Du point de vue de la technique de fabrication, des espaces intermédiaires avec une largeur W de par exemple 0,5 à 0,7 mm ne posent pas de problèmes. La hauteur de l'élément 5 au-dessus de la surface du substrat est donc représentée ici avec une taille nettement trop grande par rapport aux largeurs des espaces intermédiaires.

Pour le but visé par l'invention, il n'est pas absolument nécessaire de faire pénétrer la couleur 8 jusqu'à la surface du verre. Comme on l'a déjà mentionné plus haut, il suffit d'empêcher un enlèvement complet non autorisé, sans résidus et sans traces, de la base de l'élément 5. Etant donné que des éléments plats de sérigraphie présentent une certaine porosité après la cuisson, on pourrait même imaginer de prévoir l'élément 5 sous la forme de taches continues ou d'une base continue pour le dépôt de la couleur thermochromique, qui pourrait se figer dans les pores de celles-ci. Toutefois, il est indiqué de préférer ici un tramage, parce qu'il favorise un dépôt défini de la couleur thermochromique 8 en forme et en quantité. Ceci contribue à mécaniser le marquage coloré dans un processus industriel en ligne avant l'exécution de l'essai de stockage à chaud et ainsi d'en abaisser encore les coûts.

## Revendications

1. Procédé pour le marquage visuel de vitres (1) trempées puis traitées thermiquement en un Heat Soak test, à l'aide d'une modification d'une couche de marquage (8) déposée sur une surface de la vitre signalant visuellement l'exécution du traitement thermique de Heat Soak test, **caractérisé en ce que** l'on produit sur la surface de la vitre un champ de marquage (3) pourvu d'une structure superficielle et dont la surface est modifiée par rapport à la surface lisse de la vitre de telle manière que la couche de marquage (8) déposée sur celui-ci entre la trempe et le traitement thermique présente une liaison intime et adhérente qui ne peut pas être enlevée complètement avec des moyens mécaniques du champ de marquage (3), et dont la couleur est modifiée de façon permanente par le traitement thermique, le champ de marquage étant produit sur la surface de la vitre avant la trempe.

2. Procédé selon la revendication précédente, **caractérisé en ce que** l'on utilise comme couche de marquage, une couleur contenant un pigment thermochromique, dont la couleur se modifie de façon irréversible à la température prévue pour le traitement thermique.

3. Procédé selon l'une quelconque des revendications précédentes, **caractérisé en ce que** le champ de marquage (3) destiné au dépôt de la couche de marquage (8) est produit par une action chimique et/ou mécanique localement limitée sur la surface de la vitre, au cours de laquelle il apparaît dans cette surface des creux dans lesquels la couche de marquage (8) peut pénétrer.

4. Procédé selon l'une quelconque des revendications précédentes, **caractérisé en ce que** le champ de marquage (3) destiné au dépôt de la couche de marquage (8) est produit par le dépôt d'un revêtement (5) avec une structure superficielle inégale.

5. Procédé selon la revendication précédente, **caractérisé en ce que** le revêtement (5) est déposé sur la surface de la vitre avec des espaces intermédiaires libres définis (7), dans lesquels la couche de marquage (8) est introduite.

6. Procédé selon l'une quelconque des deux revendications précédentes, **caractérisé en ce que** le revêtement (5) est déposé par sérigraphie et est ensuite cuit avant le dépôt de la couche de marquage (8).

7. Procédé selon la revendication précédente, **caractérisé en ce que** le revêtement est cuit lors de la trempe thermique de la vitre (1).

8. Procédé selon l'une quelconque des revendications précédentes, **caractérisé en ce que** le champ de marquage (3) est une partie de la surface d'un tampon de marquage (2) prévu sur la surface de la vitre.

9. Procédé selon l'une quelconque des revendications précédentes, **caractérisé en ce que** la grandeur et la structure superficielle du champ de marquage (3) d'une part ainsi que la quantité et la consistance de la couche de marquage (8) à déposer sur le champ de marquage (3) d'autre part sont adaptées les unes aux autres de telle manière que, dans une fabrication en série, on dépose toujours la même quantité de la matière de la couche de marquage (8) sur le champ de marquage (3).

10. Procédé selon l'une quelconque des revendications précédentes **caractérisé en ce que** le traitement thermique a une température maximale comprise entre 180 et 340°C.

11. Vitre (1) trempée puis traitée thermiquement comprenant une couche de marquage déposée localement et modifiée de façon visuellement perceptible par le traitement thermique, la couche de marquage (8) ayant comme base un champ de marquage (3) présentant une structure superficielle rugueuse apte à former avec la couche de marquage une liaison intime et qui ne peut pas être enlevée complètement par des moyens mécaniques, **caractérisé en ce que** le champ de marquage (3) est appliqué sur la surface de la vitre par sérigraphie d'un motif ou d'une trame d'un revêtement (5).

12. Vitre selon la revendication précédente, **caractérisé en ce que** le revêtement (5) est cuit et fait partie d'une marque de fabricant apposée sur la surface de la vitre.

13. Vitre selon l'une quelconque des deux revendications précédentes, **caractérisé en ce que** le revêtement (5) comprend une grille de nervures croisées (6) avec des espaces intermédiaires atteignant la surface de la vitre (1).

## Claims

1. Method for the visual marking of glass panes (1) tempered and then heat-treated in a Heat Soak test, with the aid of a modification of a marking layer (8) deposited on a surface of the glass pane visually signaling the execution of the heat treatment of the Heat Soak test, **characterized in that** a marking field (3) provided with a superficial structure is produced on the surface of the glass pane, and the surface of which is modified with respect to the smooth surface of the glass pane in such a way that the marking layer (8) deposited thereon between the tempering and the heat treatment exhibits an intimate and adhesive bond which cannot be completely removed with mechanical means from the marking field (3), and whose color is modified in a permanent manner by the heat treatment, the marking field being produced on the surface of the glass pane before the tempering.

2. Method according to the preceding claim, **characterized in that** a color containing a thermochromic pigment is used as marking layer, the color of which pigment is irreversibly modified at the temperature intended for the heat treatment.

3. Method according to either one of the preceding claims, **characterized in that** the marking field (3) intended for depositing the marking layer (8) is produced by a locally limited chemical and/or mechanical action on the surface of the glass pane, during which action hollows appear in this surface into which the marking layer (8) can penetrate.

4. Method according to any one of the preceding claims, **characterized in that** the marking field (3) intended for depositing the marking layer (8) is produced by depositing a coating (5) with an uneven surface structure.

5. Method according to the preceding claim, **characterized in that** the coating (5) is deposited on the surface of the glass pane with defined open intermediate spaces (7) into which the marking layer (8) is introduced.

6. Method according to either of the two preceding claims, **characterized in that** the coating (5) is deposited by screen printing and is then baked before the marking layer (8) is deposited.

7. Method according to the preceding claim, **characterized in that** the coating is baked during the heat tempering of the glass pane (1).

8. Method according to any one of the preceding claims, **characterized in that** the marking field (3) is part of the surface of a marking stamp (2) provided on the surface of the glass pane.

9. Method according to any one of the preceding claims, **characterized in that** the size and the surface structure of the marking field (3) on the one hand and the amount and consistency of the marking layer (8) to be deposited on the marking field (3), on the other hand, are tailored to one another in such a way that, in mass production, the same amount of the material of the marking layer (8) is always deposited in the marking field (3).

10. Method according to any one of the preceding claims, **characterized in that** the heat treatment has a maximum temperature of between 180 and 340°C.

11. Glass pane (1) that is tempered and then heat-treated, comprising a locally deposited marking layer modified, in a visually perceptible manner, by the heat treatment of the substrate, the marking layer (8) having as base a marking field (3) which has a rough surface structure capable of forming an intimate bond with the marking layer and which cannot be completely removed by mechanical means, **characterized in that** the marking field (3) is applied to the surface of the glass pane by screen-printing of a coating (5) in a design or in a grid pattern.

12. Glass pane according to the preceding claim, **characterized in that** the coating (5) is baked and forms part of a manufacturer's mark affixed to the surface of the glass pane.

13. Glass pane according to either of the two preceding claims, **characterized in that** the coating (5) comprises a grid of intersecting ribs (6) with intermediate spaces reaching as far as the surface of the glass pane (1).

## Patentansprüche

1. Verfahren zur visuellen Markierung von vorgespannten, anschließend in einem Heat-Soak-Test wärmebehandelten Fensterscheiben (1), mit Hilfe einer Veränderung einer auf einer Fläche der Scheibe aufgebrachten Markierungsschicht (8), welche auf die Durchführung der "Heat-Soak-Test"-Wärmebehandlung visuell hinweist, **dadurch gekennzeichnet, dass** auf der Oberfläche der Scheibe ein Markierungsfeld (3) erzeugt wird, das mit einer Oberflächenstruktur versehen ist und dessen Oberfläche gegenüber der glatten Oberfläche der Scheibe derart verändert ist, dass die Markierungsschicht (8), die zwischen dem Vorspannen und der Wärmebehandlung auf dieses aufgebracht wird, eine innige und haftende Verbindung aufweist und mit mechanischen Mitteln nicht vollständig von dem Markierungsfeld (3) entfernt werden kann und ihre Farbe durch die Wärmebehandlung permanent verändert wird, wobei das Markierungsfeld vor dem Vorspannen auf der Oberfläche der Scheibe erzeugt wird.

2. Verfahren nach dem vorstehenden Anspruch, **dadurch gekennzeichnet, dass** als Markierungsschicht eine Farbe verwendet wird, die ein thermochromes Pigment enthält, dessen Farbe sich bei der für die Wärmebehandlung vorgesehenen Temperatur irreversibel ändert.

3. Verfahren nach einem der vorstehenden Ansprüche, **dadurch gekennzeichnet, dass** das für das Aufbringen der Markierungsschicht (8) bestimmte Markierungsfeld (3) durch ein lokal begrenztes chemisches und/oder mechanisches Einwirken auf die Oberfläche der Scheibe erzeugt wird, während dessen in dieser Oberfläche Vertiefungen sichtbar werden, in welche die Markierungsschicht (8) eindringen kann.

4. Verfahren nach einem der vorstehenden Ansprüche, **dadurch gekennzeichnet, dass** das für das Aufbringen der Markierungsschicht (8) bestimmte Markierungsfeld (3) durch das Abscheiden einer Beschichtung (5) mit einer unebenen Oberflächenstruktur erzeugt wird.

5. Verfahren nach dem vorstehenden Anspruch, **dadurch gekennzeichnet, dass** die Beschichtung (5) auf der Oberfläche der Scheibe mit definierten freien Zwischenräumen (7), in die die Markierungsschicht (8) eingebracht wird, abgeschieden wird.

6. Verfahren nach einem der beiden vorstehenden Ansprüche, **dadurch gekennzeichnet, dass** die Beschichtung (5) mittels Siebdruck abgeschieden wird und anschließend vor Aufbringen der Markierungsschicht (8) gehärtet wird.

7. Verfahren nach dem vorstehenden Anspruch, **dadurch gekennzeichnet, dass** die Beschichtung während des thermischen Vorspannens der Scheibe (1) gehärtet wird.

8. Verfahren nach einem der vorstehenden Ansprüche, **dadurch gekennzeichnet, dass** das Markierungsfeld (3) ein Teil der Fläche eines auf der Oberfläche der Scheibe vorgesehenen Markierungsstempels (2) ist.

9. Verfahren nach einem der vorstehenden Ansprüche, **dadurch gekennzeichnet, dass** die Größe und die Oberflächenstruktur des Markierungsfeldes (3) einerseits sowie die Menge und die Konsistenz der auf dem Markierungsfeld (3) aufzubringenden Markierungsschicht (8) andererseits derart einander angepasst sind, dass bei einer Serienfertigung stets die gleiche Menge des Materials der Markierungsschicht (8) auf das Markierungsfeld (3) aufgebracht wird.

10. Verfahren nach einem der vorstehenden Ansprüche, **dadurch gekennzeichnet, dass** die Wärmebehandlung eine maximale Temperatur im Bereich zwischen 180 und 340 °C hat.

11. Fensterscheibe (1), die vorgespannt, anschließend wärmebehandelt ist, aufweisend eine Markierungsschicht, die lokal aufgebracht und durch die Wärmebehandlung visuell wahrnehmbar verändert ist, wobei die Markierungsschicht (8) als Unterlage ein Markierungsfeld (3) hat, das eine rauhe Oberflächenstruktur aufweist, welche geeignet ist, eine innige Verbindung mit der Markierungsschicht zu bilden, die mit mechanischen Mitteln nicht vollständig entfernt werden kann, **dadurch gekennzeichnet, dass** das Markierungsfeld (3) auf der Oberfläche der Scheibe durch Siebdrucken eines Musters oder eines Rasters einer Beschichtung (5) aufgebracht ist.

12. Fensterscheibe nach dem vorstehenden Anspruch, **dadurch gekennzeichnet, dass** die Beschichtung (5) gehärtet ist und Teil eines auf der Oberfläche der Scheibe aufgebrachten Herstellerzeichens ist.

13. Fensterscheibe nach einem der beiden vorstehenden Ansprüche, **dadurch gekennzeichnet, dass** die Beschichtung (5) ein Gitter aus gekreuzten Rippen (6) mit Zwischenräumen, die bis zur Oberfläche der Scheibe (1) reichen, umfasst.
